# EUROPEAN PATENT APPLICATION

(11) **EP 4 714 862 A1**
(43) Date of publication of application: **25.03.2026**
(21) Application number: 24201015.5
(22) Date of filing: 18.09.2024
(51) Int. Cl.: B65G 1/04

(54) **EXCHANGE CELL FOR STORAGE CONTAINERS**

(71) Applicant: AutoStore Technology AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to an exchange cell (500) configured to enable a storage container (112)of a storage and retrieval system to be accessed from at least two directions. The exchange cell (500) comprises a frame configured to support a storage container(112), wherein the frame enables the storage container (112) to be accessed from a vertical direction by a first container-handling vehicle (502) and from at least one horizontal direction by a second container-handling vehicle (504). The frame comprises a securing mechanism configured to resist horizontal movement of the storage container (112) in order to align the storage container (112) at a desired position within the exchange cell (500).

## Description

### TECHNICAL FIELD

The present disclosure relates to an exchange cell. More particularly, it relates to an exchange cell configured to enable a storage container of a storage and retrieval system to be accessed from at least two directions, and associated systems and methods.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In such systems, multiple container-handling vehicles can operate on the same grid. However, there is a limit to how many container-handling vehicles can safely operate on the same set of tracks. This places a limit on the size and efficiency of the system. It would be advantageous to provide systems and methods which enable increased efficiency when storing and retrieving containers in the automated storage and retrieval system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C and Fig 3D show a perspective side view and perspective upward view of the container-handling vehicle of Fig. 3B;
Fig. 4 shows a computing device for implementing the operations described herein;
Fig. 5 shows an exchange cell grid adjacent to a storage grid;
Fig. 6 shows a simplified view of a single column of an exchange cell grid;
Fig. 7A shows an example frame for an exchange cell in an exchange cell grid;
Fig. 7B shows a close up of a securing mechanism of the frame of Fig. 7A;
Fig. 8 and Fig. 9 show other example frames for an exchange cell in an exchange cell grid;
Fig. 10A shows another example frame for an exchange cell in an exchange cell grid having a different form of securing mechanism;
Fig. 10B shows a close up of the securing mechanism of the frame of Fig. 10A;
Fig. 10C shows an upward perspective view of the frame and container of Fig 10A;
Fig. 11A shows yet another example frame for an exchange cell in an exchange cell grid having a different form of securing mechanism;
Fig. 11B shows a close up of the securing mechanism of the frame of Fig. 11A;
Fig. 11C shows an upward perspective view of the frame and container of Fig 11A;
Fig. 12 shows an example method according to the present disclosure; and
Fig. 13 shows another example method according to the present disclosure.

### DETAILED DESCRIPTION

In overview, the present disclosure relates to providing systems and methods to enable a storage container in an automated storage and retrieval system to be accessed from more than one direction. In particular, the present disclosure relates to enabling a storage container to be accessed from above, in a vertical direction, as well as from the side, in a horizontal direction. By enabling a container to be accessed from multiple directions in this manner, the efficiency and versatility of the storage and retrieval system can be improved because multiple types of container-handling vehicle can interface with the containers. In particular, container-handling vehicles situated above the container storage grid can access the storage containers from above, while container-handling vehicles situated to the side of the container storage grid can access the storage containers from the side. To facilitate this, the present disclosure provides an "exchange cell", which is a storage space configured to hold a storage container and permit the storage container to be accessed (i.e. stored or removed) from a vertical direction and at least one horizontal direction.

The present inventors have identified that, when providing an exchange cell of this nature, it is important that a storage container is well aligned within the cell. This is because container-handling vehicles need to be able to access the container from multiple directions. The present inventors have identified that even a very small error in the alignment between a stored storage container and a container-handling vehicle can result in problems when accessing and retrieving said container. For example, a misalignment may result in a container being retrieved at an incorrect angle which could result in the container getting stuck or becoming damaged. In some cases, if the container is misaligned, then a container-handling vehicle may not be able to interact with the container effectively at all. In short, ensuring proper alignment of the container in both the vertical and (one or more) horizontal directions has been found to be surprisingly important for ensuring proper functioning of the storage and retrieval system.

With the above in mind, the present disclosure provides an exchange cell having a securing mechanism that is configured to properly align a storage container in the required vertical and (one or more) horizontal directions. These systems and associated methods will now be described in further detail.

According to a first aspect of the present disclosure, an exchange cell configured to enable a storage container of a storage and retrieval system to be accessed from at least two directions is disclosed. The exchange cell comprises a frame configured to support a storage container, wherein the frame enables the storage container to be accessed from a vertical direction (i.e. from above or below) by a first container-handling vehicle and from at least one horizontal direction (i.e. from the side) by a second container-handling vehicle. To provide the aforementioned alignment, the frame comprises a securing mechanism configured to resist horizontal movement of the storage container in order to align the storage container at a desired position within the exchange cell.

In this manner, an effective mechanism for ensuring a storage container is well aligned in at least two directions is provided. Specifically, the frame and securing mechanism ensure the container is stored at a reliable, predetermined location within the exchange cell such that a container-handling vehicle seeking to access the container from a vertical or horizontal direction can reliably find and interface with the container every time. This avoids any misalignment between the container-handling vehicle and the container and the problems associated therewith.

The securing mechanism may be configured to resist horizontal movement in one, two, three or four horizontal directions, such as forwards, backwards, leftwards and rightwards. In some cases the securing mechanism may be configured to resist horizontal movement of the storage container in any direction. By limiting movement of the storage container in the horizontal connection, the container can be precisely and reliably positioned and a container-handling vehicle approaching the container can be certain where the container will be located within the exchange cell.

The frame of the exchange cell may comprise a first opening configured to enable the storage container to be accessed from the vertical direction by the first container-handling vehicle. In that case, the securing mechanism may be configured to align the storage container at a specific location relative to the first opening. This ensures that a container-handling vehicle seeking to access or remove the container from a vertical direction (e.g. from above) can be certain about where the container will be located within the exchange cell relative to the opening through which that container-handling vehicle is accessing the exchange cell.

Similarly, the frame of the exchange cell may comprise a second opening configured to enable the storage container to be accessed from the horizontal direction by the second container-handling vehicle. In that case, the securing mechanism may be configured to align the storage container at a specific location relative to the second opening. As above, this ensures that a container-handling vehicle seeking to access or remove the container from a horizontal direction (e.g. from the side) can be certain about where the container will be located within the exchange cell relative to the opening through which that container-handling vehicle is accessing the exchange cell.

In more general terms, the securing mechanism may be configured to align the storage container at a specific location relative to each opening in the frame through which container-handling vehicles may interface with the container.

The securing mechanism may comprise any suitable member, structure or device configured to restrict movement of the container in one or more directions. In some examples, the securing mechanism may comprise a blocking member which the storage container must be lifted over to enable the storage container to be removed from the exchange cell in the at least one horizontal direction. Provision of such a blocking member ensures that the container cannot slide over the blocking member accidentally but rather must be actively lifted over the blocking member to be removed from the exchange cell. This reduces the chance that the container can move inadvertently and become misaligned. The second container-handling vehicle can then be programmed to lift the container by the required amount to clear the blocking member when removing the container. In some examples, the blocking member may comprise one or more of a ridge, rod, locking pin, bump, nodule or protrusion. The blocking member may have a predetermined minimum height, for example 5mm, to reduce the likelihood of accidental movement of the container.

In some examples the securing mechanism comprises at least two support plates for supporting the storage container. These provide a surface on which the container rests when within the exchange cell and further restrict the movement of the container, in this case in the vertical direction. In some examples, a blocking member for resisting horizontal movement of the storage container is provided at an end of each support plate, optionally at both ends of each support plate. In this manner, the support plates and blocking member(s) work together to restrict the movement of the container, further increasing the reliability with which it can be positioned.

In some examples, the frame of the exchange cell comprises a first guide member configured to guide the storage container into position within the securing mechanism when it is placed into the exchange cell in the vertical direction. In this manner the first guide member restricts movement (e.g. horizontal movement) of the container as it is lowered (or raised) into the exchange cell. This further enables the container to be reliably lowered (or raised) to the correct position within the exchange cell. The first guide member may additionally or alternatively be configured to guide a gripper of the first container-handling vehicle as it lowers the storage container into the exchange cell or retrieves the storage container from the exchange cell from the vertical direction. The first guide member may thereby restrict movement (e.g. horizontal movement) of the gripper as it is lowered (or raised) into/out of the exchange cell. By restricting movement of the gripper, the likelihood that the container held by the gripper becomes misaligned is once again reduced.

Similarly, in some examples, the frame of the exchange cell comprises a second guide member configured to guide the storage container into position within the securing mechanism when it is placed into the exchange cell from the horizontal direction. In this manner the second guide member restricts movement (e.g. horizontal movement) of the container as it is slid or placed into the exchange cell from the side. This further enables the container to be reliably placed into the correct position within the exchange cell. The second guide member may additionally or alternatively be configured to guide a gripper or arm of the second container-handling vehicle as it slides or moves the storage container into the exchange cell or retrieves the storage container from the exchange cell from the horizontal direction. The second guide member may thereby restrict movement (e.g. horizontal movement) of the gripper/arm as it is slid or entered into/out of the exchange cell. By restricting movement of the gripper/arm, the likelihood that the container held by the gripper/arm becomes misaligned is once again reduced.

In some examples the frame of the exchange cell enables an extraction arm of the second container-handling vehicle to contact the bottom of the storage container to enable the second container-handling vehicle to retrieve the storage container from the exchange cell in the at least one horizontal direction. In this manner, the second container-handling vehicle can place an arm or other retrieving member underneath the container and easily slide or extract the container from the exchange cell without need for any more complex interface between the container-handling vehicle and the container.

The frame of the exchange cell may enable the storage container to be accessed from one or more horizontal directions, for example from one horizontal direction, from two horizontal directions, from three horizontal directions, or from four horizontal directions (e.g. from a front, back, and two sides of the storage container). The greater the number of directions the container is accessible from, the greater the versatility of the exchange cell in terms of enabling container-handling vehicles from multiple directions to be able to interface with the exchange cell. Where the storage container can be accessed from multiple directions, a single container-handling vehicle may be configured to access the container from each of said directions, and/or a plurality of container-handling vehicles maybe provided, for example one container-handling vehicle configured to access the container from each direction.

According to another aspect of the present disclosure, a container storage and retrieval system is disclosed comprising an exchange cell grid, wherein each exchange cell in the exchange cell grid is arranged as described in any of the examples herein. The container storage and retrieval system may further comprise tracks located above and/or adjacent to the exchange cell grid, configured to enable a first container-handling vehicle to travel along the tracks and interact with storage containers stored in the exchange cell grid from above or below in a vertical direction. The frame of each exchange cell in the exchange cell grid may be configured to support a storage container in a plane that is parallel with the tracks located above and/or adjacent to the exchange cell grid, further improving the alignment between the storage container and any container-handling vehicles running on said tracks.

In some examples, the storage and retrieval system further comprises a storage grid adjacent to the exchange cell grid. The storage grid may comprise a storage area as described herein where containers can be stored. In some examples, the storage grid differs from the exchange cell grid in that containers in the storage grid, unlike the exchange cell grid, are only accessible in one direction (e.g. in the vertical direction). Tracks may be located above the storage grid configured to enable a first container-handling vehicle to travel along the tracks and interact with storage containers stored in the storage grid from above in the vertical direction. The tracks above the storage grid may be continuous with the tracks above and/or adjacent to the exchange cell grid. In this manner, a container-handling vehicle can seamlessly move between the exchange cell grid and storage grid and interact with containers stored therein.

The container storage and retrieval system may further comprise a first container-handling vehicle configured to travel along the tracks and interact with storage containers stored in the exchange cell grid from the vertical direction, such as from above. The container storage and retrieval system may further comprise a second container-handling vehicle configured to interact with storage containers stored in the exchange cell grid from a horizontal direction, such as from the side.

According to another aspect of the present disclosure, a method of storing and retrieving a storage container is disclosed, the method comprising: lowering (or raising), from a vertical direction and by a first container-handling vehicle, a storage container into an exchange cell; and retrieving, from a horizontal direction and by a second container-handling vehicle, the storage container from the exchange cell. The exchange cell may be arranged as described in any of the examples herein. In particular, the exchange cell may comprise a frame configured to support the storage container and a securing mechanism configured to resist horizontal movement of the storage container in order to align the storage container at a desired position within the exchange cell.

According to yet another aspect of the present disclosure, a method of storing and retrieving a storage container is disclosed, the method comprising: inserting, from a horizontal direction and by a first container-handling vehicle, a storage container into an exchange cell; and retrieving, from a vertical direction and by a second container-handling vehicle, the storage container from the exchange cell. The exchange cell may be arranged as described in any of the examples herein. In particular, the exchange cell may comprise a frame configured to support the storage container and a securing mechanism configured to resist horizontal movement of the storage container in order to align the storage container at a desired position within the exchange cell.

The methods disclosed herein may be computer implemented, for example by a controller of the storage and retrieval system. Accordingly, according to another aspect of the present disclosure a computer apparatus configured to perform any of the methods described herein is disclosed. According to yet another aspect of the present disclosure a computer-readable medium comprising instructions which, when executed by a computer, cause the computer to carry out any of the methods described herein is disclosed. According to yet another aspect of the present disclosure, a computer program comprising instructions which, when the program is executed by a computer, cause the computer to carry out any of the methods described herein is disclosed.

The disclosed systems and methods will now be described in greater detail to aid understanding, beginning with a description of the storage and retrieval system as a whole.

### Automated storage and retrieval system overview

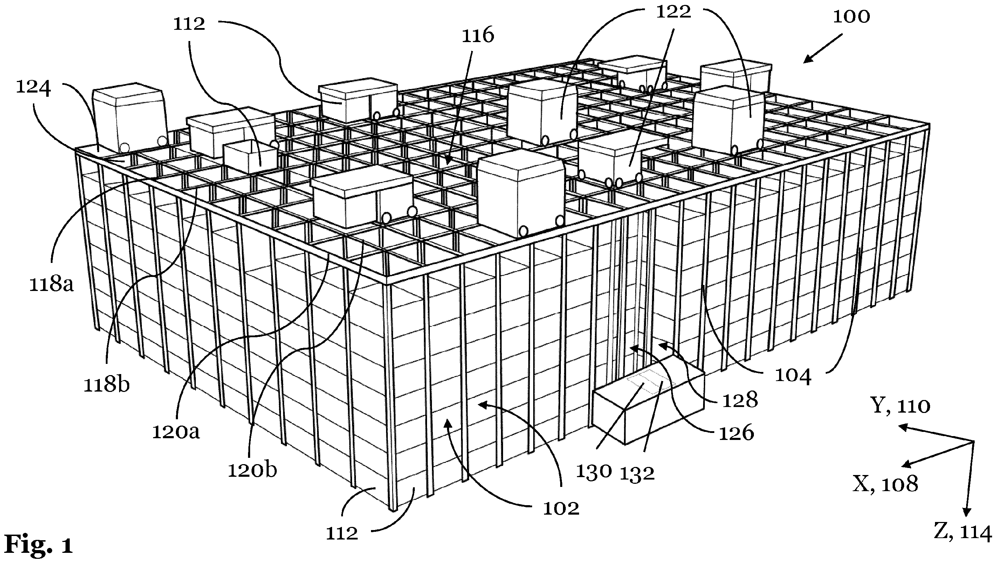

Referring first to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers (also referred to as "bins") 112 are stacked on top of each other, preferably in a self-supporting manner, in the Z direction 114 in the columns 102, forming a storage volume of storage cells for respective containers 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport containers 112 in both the X and Y directions 108, 110. The container-handling vehicles 122 are additionally configured to lift and lower containers 112 from/into the columns 102 in the Z direction 114, the containers 112 optionally being guided by the vertical frame members 104. The container-handling vehicles 122 access the containers 112 via access openings 124 above the columns 102 and formed between the rails 118, 120.

Some columns 102 may be used for alternative purposes than container storage. For example, port columns 126, 128 comprise port or access columns allowing transfer of a container 112 in and/or out of the grid 100. Port columns 126, 128 provide a vertical channel for lifting of a container 112 from, or lowering of a container 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering (`pick-up') containers 112 from/to the grid 100. The ports 130, 132 are therefore configured to allow containers 112 to be removed and reintroduced (horizontally) into the associated port column. As such, a port 130, 132 can comprise a conveyor (not shown in Fig. 1) onto which a container 112 maybe lowered and transported horizontally out of the port column. The port columns 126, 128 include an opening or access point through which containers 112 can enter and leave the column.

Containers 112 can be transported along the top of the grid 100 to and/or from a port column 126, 128 by container-handling vehicles 122, and from a port 130, 132 to a location outside the grid 100, which may be an access station (not shown) for processing of the container 112 or its contents, such as a picking station for adding content to, or removing content from, the container 112. In alternative examples (not shown), the container 112 may be transported to a port of another grid on the same or another level, or to an external facility. Transport of containers 112 to and from ports 130, 132 may be by any appropriate means (not shown) including conveyors, transport vehicles, lifts or container-handling vehicles.

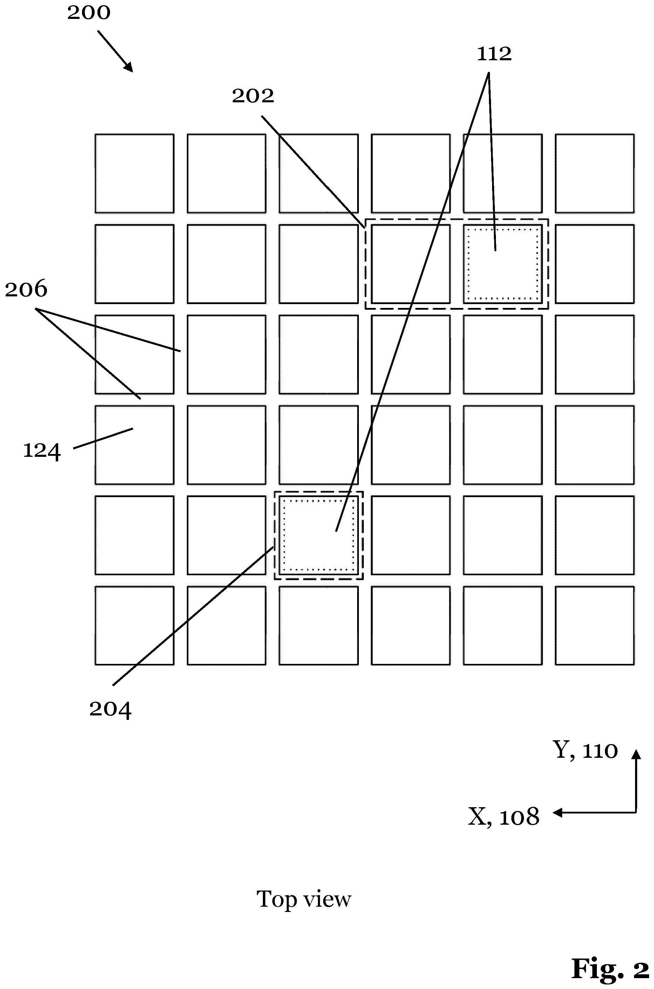

Referring to the embodiment shown in Fig. 2, the X-Y configuration 200 of the rail system 116 can be seen in more detail, together with container-handling vehicles 202, 204 of different types. The rail system includes rails 206 defining between them vertical column access openings 124 for access to containers 112. The rails 206 can be any appropriate type for permitting travel of the container-handling vehicles 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

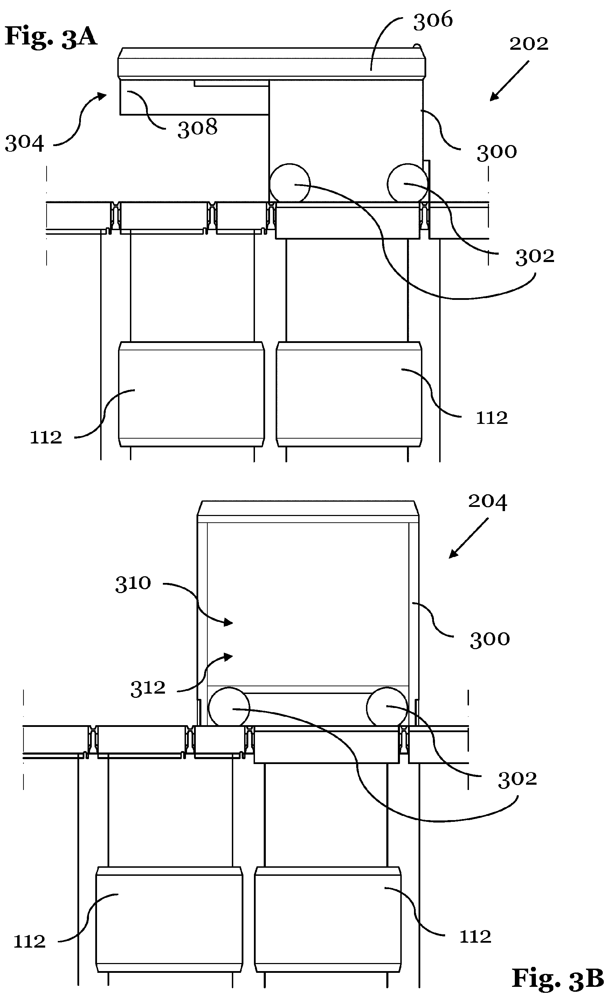

A first, 'cantilever' type of container-handling vehicle 202 is shown in more detail in Fig. 3A and includes a body 300, a set of wheels 302 and a lifting device 304. The body 300 contains operational equipment (not shown) for the container-handling vehicle 202 including drive, power and control systems. The wheels 302 permit movement of the container-handling vehicle 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308 (also referred to herein as a "gripper"), which is raisable and lowerable from the cantilever element 306. The gripping device 308 is configured to grip or engage a container 112; for example, by gripping a part of the container 112, or by passively or actively engaging a suitably configured part of the container 112.

A second, 'internal cavity' type of container-handling vehicle 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the container-handling vehicle's operational equipment and a storage space for one or more containers 112, for use, for example, while transporting the container 112.

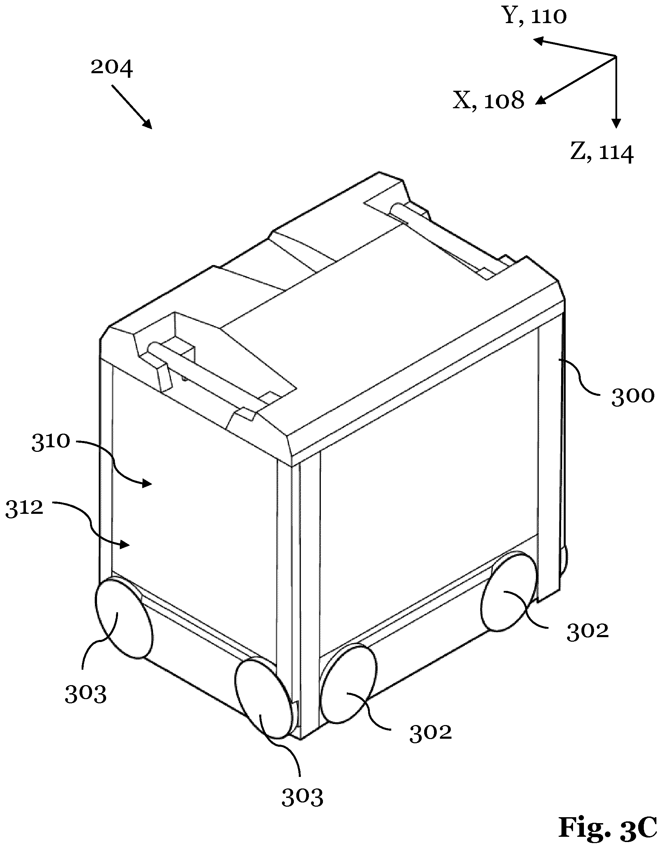

Fig. 3C shows a perspective side view of the container-handling vehicle of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the container-handling vehicle 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the container-handling vehicle 202 to move in the X and Y direction across the arrangement of rails shown in Fig. 2. Although the perspective view shown in Fig. 3C is of the container-handling vehicle 204 of Fig. 3B, it will be appreciated that a similar perpendicular wheel arrangement may be applied to the container-handling vehicle 202 of Fig. 3A.

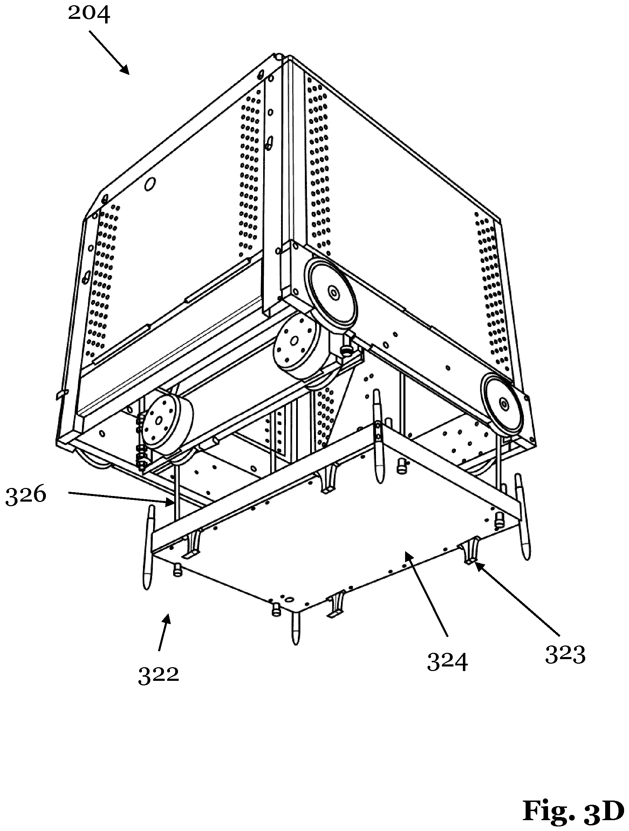

Fig 3D shows an upward perspective view of the container-handling vehicle of Fig. 3B and 3C. From this angle, a gripping device 322 (also referred to herein as a "gripper") is visible, shown in a partly suspended state. Gripping device 322 comprises a gripping plate 324 on which is provided a plurality of interface members 323 configured to engage with a container such that it can be lowered or lifted into/out of the storage and retrieval system. In this example, plate 324 is lowered on four spoolable bands 326, one at each corner. Other mechanisms for lowering and raising gripping device 322 will be apparent. While Fig. 3D shows the 'internal cavity' type of container-handling vehicle of Fig. 3B and 3C, it will be appreciated that the `cantilever' type of container-handling vehicle of Fig. 3A can have a gripping device of a similar construction to that shown in Fig. 3D.

### Control and monitoring system

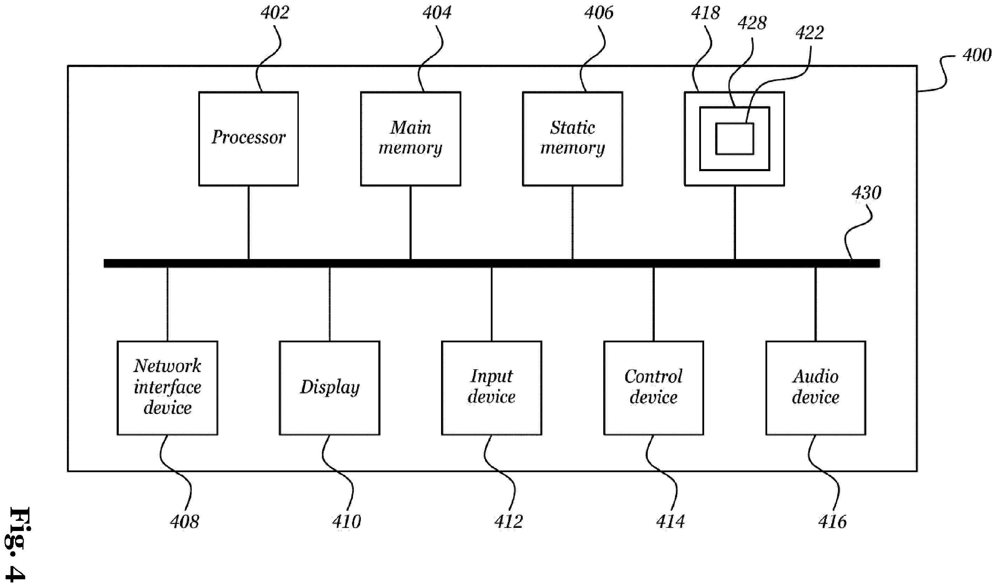

Control and monitoring of the automated storage and retrieval system, including monitoring and storing container position and controlling container delivery, retrieval and transport and container-handling vehicle routing and collision avoidance, is performed by a control system shown in Fig. 4 in communication with the container-handling vehicles and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each container 112 is given a unique identifier, which may be marked on the container 112 using a computer-readable identifier (e.g., a barcode, quick-response code or radio-frequency identification tag) to ease identification of the container 112. A database of the processing system 400 stores, in association with the unique identifier, the position and, optionally, content of each container 112. When a container 112 is moved (e.g., when it is retrieved from the grid 100), the database is updated to record its change in position.

When it is desired to retrieve a container 112 from the grid 100, under control of the processing system 400, a container-handling vehicle 202, 204 is routed via the rail system 116 to the vertical column 102 including the storage cell where, according to the database, the container 112 is positioned, and the lifting device 304, 312 is positioned (according to container-handling vehicle type) over the corresponding access opening 124, either adjacent or below the container-handling vehicle 202, 204. The container-handling vehicle 202, 204 lowers the gripping device 308 which engages, grips and lifts the container 112 to the container-handling vehicle 202, 204. The container-handling vehicle 202, 204 then transports the container 112, for example, to the drop-off port column 126, 128 for delivery to the port 130, 132 and subsequent processing external to the grid 100. In the event that the target or designated container 112 is below other containers in the stack then the container-handling vehicle 202, 204 or multiple container-handling vehicles, which may be dedicated to the task, are controlled in a 'digging' operation to sequentially lift and reposition, temporarily or permanently, containers above the target container 112 in order for it to be retrieved. It will be appreciated that other operations in relation to the container 112 can be carried out in a similar manner. For example, a container 112 can be delivered for storage in the grid 100 at the port 130, 132 of the pick-up port column 126, 128, gripped and lifted by a container-handling vehicle 202, 204 and delivered to the desired storage cell, containers above the desired position being repositioned if necessary as discussed above.

### Exchange grid and exchange cells

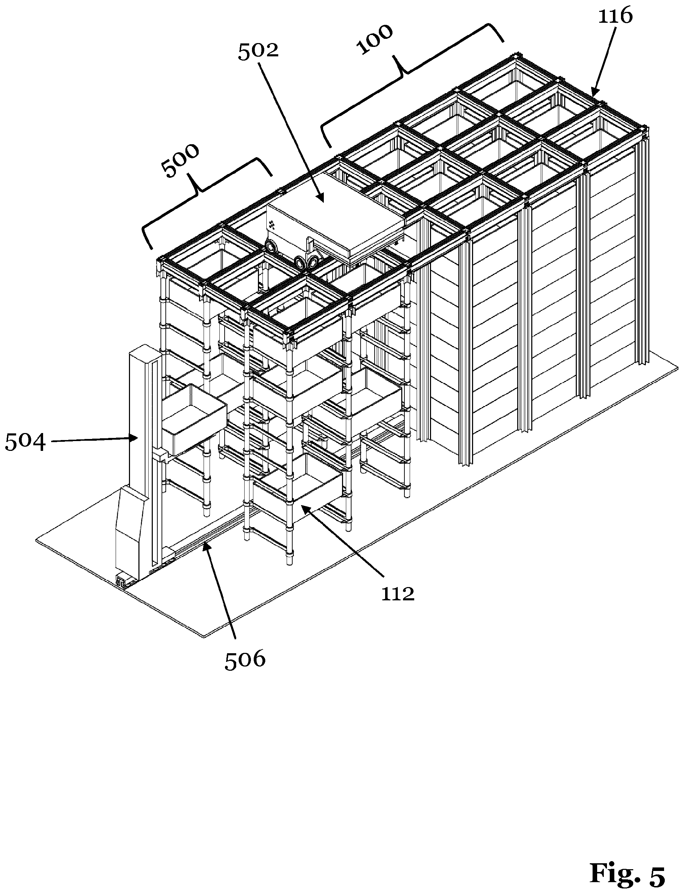

The description of Figs. 1-4 has so far focussed only on a storage grid 100 in which containers 112 can be accessed from a single direction, namely in the vertical direction from above. However, the present inventors have identified that it may be useful for storage containers to also be accessible from a second, horizontal direction. With this in mind, Fig. 5 shows storage grid 100 having the same construction as described in relation to Fig. 1 but now provided alongside an exchange cell grid 500. Unlike storage grid 100, exchange cell grid 500 permits container-handling vehicles to access containers from both a vertical and horizontal direction. In particular, a first container-handling vehicle 502 is shown. This vehicle 502 has the same construction as cantilever container-handling vehicle 202 shown in Fig. 3A. The system of tracks or rails 116 described in relation to Fig. 1 on which vehicle 502 travels can now be seen to extend above exchange cell grid 500 in addition to storage grid 100. As a result, in the same way as vehicle 502 accesses storage containers 112 from above in the storage grid 100, vehicle 502 can similarly access containers 112 in the exchange cell grid 500 from above. While in the example of Fig. 5 the tracks are provided across the full extent of the exchange cell grid 500, it will be appreciated that where a cantilever vehicle is used the tracks may terminate one cell in from the edge given that a cantilever vehicle can "reach over" the edge of the track.

Exchange cell grid 500 comprises a plurality of columns of exchange cells. Each exchange cell is configured to store one container 112 in this example. Each exchange cell in this example is also configured to support a storage container 112 in a plane that is parallel with the tracks 116, to improve the likelihood that the container is well aligned relative to the vehicles (e.g. vehicle 502) running on the tracks 116.

In addition to being accessible from a vertical direction, the containers 112 in exchange cell grid 500 can also be accessed from a horizontal direction by a second container-handling vehicle 504. In this example, second container-handling vehicle 504 travels on a rail 506 that passes between rows of exchange cells in the exchange cell grid 500, however it will be appreciated that other systems for enabling container-handling vehicle 504 to access containers 112 from the sides can be used.

In the example of Fig. 5, the storage grid 100 is provided adjacent to the exchange cell grid 500. This makes it easier for container-handling vehicles 502, 504 to move between the two grids. It will be appreciated that "adjacent to" should be interpreted broadly. In some examples, as shown in Figure 5, the grids 100, 500 are next to one another. However, it is also possible for one grid to surround the other, for one grid to be embedded within the other, or for the grids to simply be near oneanother. The term "adjacent" as used here should be interpreted as encompassing all of these relative arrangements of the grids.

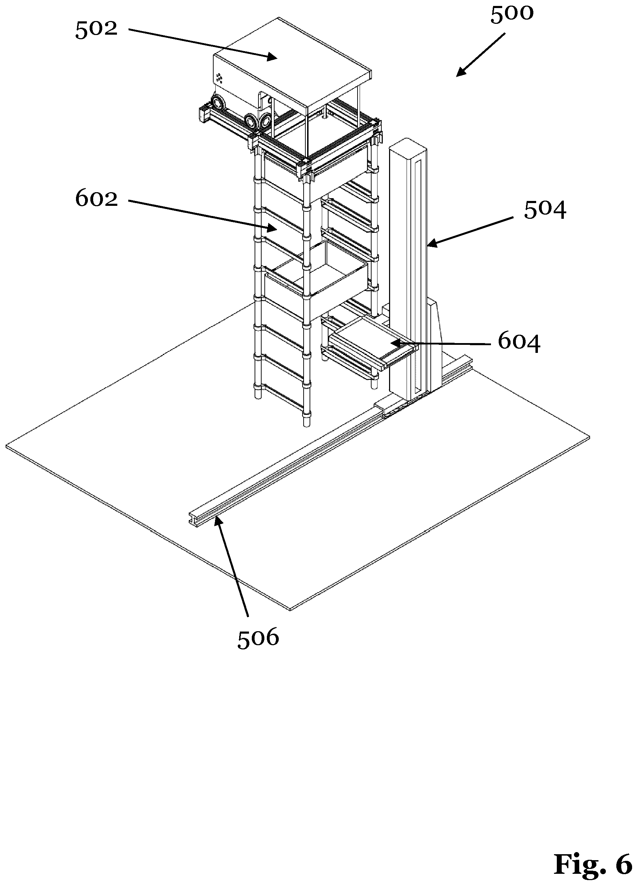

Fig. 6 shows a simplified exchange cell grid 500 having a single column of exchange cells 602, to aid understanding. In this example the column of the exchange cell grid 500 comprises eight exchange cells 602, however it will be appreciated that each column can comprise any suitable number of exchange cells 602. In this example, rail 506 on which second container-handling vehicle 504 moves is at the side of the exchange cell grid 500. In Fig. 6, arm 604 of second container-handling vehicle 504 is more clearly visible. In this example, arm 604 is arranged to be slid under a container 112 in one of the exchange cells 602. Once in position, arm 604 can be moved upwards into contact with the bottom of container 112 such that container 112 can be extracted from the exchange cell 602 by extracting the arm 604 on which the container 112 is now supported.

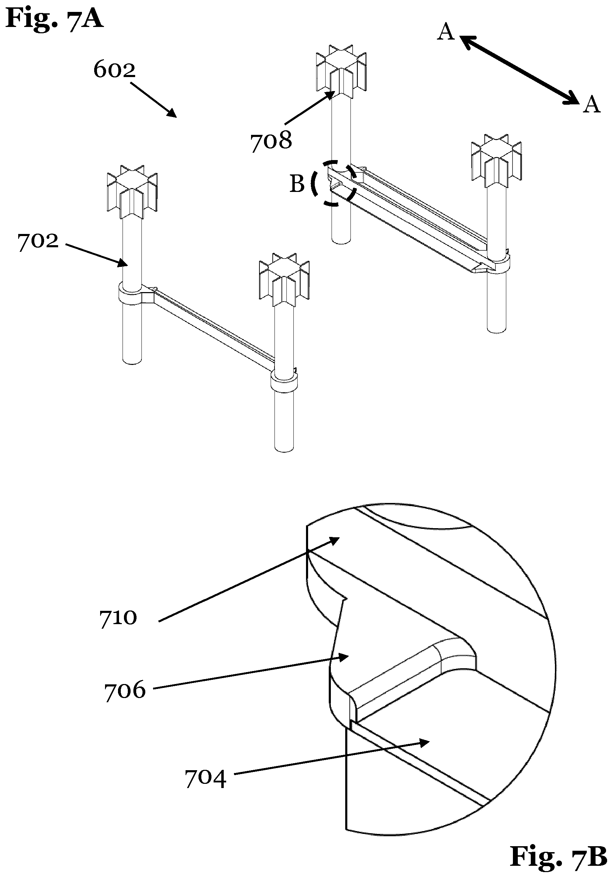

Turning now to Fig. 7A, an example exchange cell 602 is shown in more detail. Exchange cell 602 comprises a frame 702 configured to support a storage container 112. Frame 702 enables the storage container 112 to be accessed from a vertical direction by a first container handling vehicle 502 and from at least one horizontal direction by a second container handling vehicle 504, as described above in relation to Fig. 5 and 6. Multiple such frames 702 can be stacked on top of one another to provide a column of the exchange cell grid 500. Adjacent columns may then be connected together as in the case of a standard storage grid 100.

In the example of Fig. 7A, the frame 702 permits a storage container 112 to be accessed from above and from two horizontal directions parallel with direction A-A. In particular, a container-handling vehicle may contact the storage container (such as with an arm 604 of the sort show in in Fig. 6) to enable the container-handling vehicle to retrieve the storage container 112 from the exchange cell 602 in the horizontal direction. In some cases, the arm of the container-handling vehicle may slide underneath the container so as to support and lift the container out of the exchange cell. For ease of understanding, storage container 112 is not visible in Fig. 7A, in other words the exchange cell 602 shown is empty.

### Securing mechanisms

As noted above, correctly aligning a container 112 within an exchange cell 602 is important to ensure reliable functioning of the system. With this in mind, the frame 702 of Fig. 7A comprises a securing mechanism that resists horizontal movement of a storage container 112 in order to keep the storage container 112 aligned at a desired position within the exchange cell 602. The securing mechanism can be seen more clearly in Fig. 7B which shows a close up detail view of the area shown within dashed circle B in Fig. 7A. The securing mechanism is such that the storage container 112 must be lifted over at least part of the securing mechanism to enable the storage container 112 to be removed from the exchange cell 602 in the at least one horizontal direction.

In more general terms, the securing mechanism is configured to align a storage container within the exchange cell 602 at a specific location relative to a first opening through which the container is accessed from a vertical direction by a first container handling vehicle 502, such as one of openings 124 described in relation to Figure 2. Similarly, the securing mechanism is configured to align the storage container within the exchange cell 602 at a specific location relative to a second opening through which the container is accessed from a horizontal direction by a second container handling vehicle 504. Several such side openings can be seen in each of Figs. 5 and 6.

Turning back to Fig. 7A, as can be seen, in this example the securing mechanism comprises a support plate 704 for supporting the storage container 112 from below. The securing mechanism further comprises a blocking member which the storage container 112 must be lifted over to enable the storage container 112 to be removed from the exchange cell 602 in the horizontal direction A-A. In the example shown, blocking member comprises a bevelled ridge 706, however it will be appreciated that any suitable type of blocking member can be used. In the example of Fig. 7A, a support plate 704 is provided at two sides of the exchange cell 602 and a ridge 706 is provided at both ends of each support plate 704. However, other arrangements are possible.

The exchange cell 602 in this example further comprises a first guide member 708 configured to guide the storage container 112 into position within the securing mechanism when it is placed into or removed from the exchange cell 602 from the vertical direction, such as by first container-handling vehicle 502. In this example, this is achieved through the first guide member 708 being shaped and sized so as to interface with the corners or edges of a storage container 112 as it is lowered into the exchange cell 602, thereby centring the container 112 from a vertical direction and preventing misalignment. Advantageously, in this example the first guide member 708 is further configured to guide a gripper of the first container handling vehicle 502 as it lowers the storage container 112 into the exchange cell 602 or retrieves the storage container 112 from the exchange cell 602 from the vertical direction. For example, first guide member 708 can be shaped and sized so as to interface with the corners of a gripper plate 324 as described above in relation to Fig. 3D. In the example of Fig. 7A, each exchange cell 602 comprises four first guide members 708, one at each corner. However, it will be appreciated that any suitable number of first guide members 708 can be provided.

In this example, the exchange cell 602 further comprises a second guide member 710. The second guide member 710 performs a similar function as the first guide member 708 but in the horizontal direction. In particular, the second guide member 710 is configured to guide a storage container 112 into position within the securing mechanism when it is placed into or removed from the exchange cell 602 from the horizontal direction such as by second container-handling vehicle 504. In this example, this is achieved through the second guide member 710 being shaped and sized so as to interface with the sides or edges of a storage container 112 as it is moved or slid into the exchange cell 602, thereby centring the container 112 from a horizontal direction and preventing misalignment. The second guide member 710 may be further configured to guide a gripper or arm of the second container handling vehicle 504 as it moves or slides the storage container 112 into the exchange cell 602 or retrieves the storage container 112 from the exchange cell 602 from the horizontal direction, in a similar manner as described above for the first guide member 708. In the example of Fig. 7A, each exchange cell 602 comprises two second guide members 710, however it will be appreciated that any suitable number of second guide members 710 can be provided.

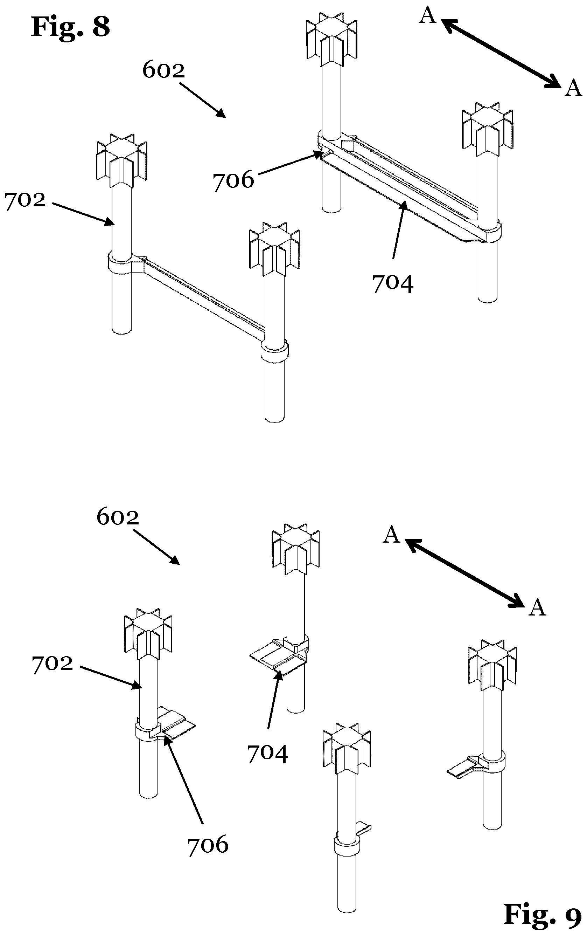

Turning to Fig. 8, an alternative implementation is provided. In this example, as in Fig. 7, the securing mechanism comprises two support plates 704 provided at two sides of the exchange cell 602. Hence, the exchange cell 602 in this example similarly enables a container 112 to be inserted and removed from exchange cell 602 in two horizontal directions parallel with direction A-A. However, in contrast to the example of Fig. 7, in this example each support plate 704 only comprises a blocking member ridge 706 at one end. This means that from one direction the container 112 can be slide onto and off the support plates 704 without resistance. This makes it simpler to insert and remove containers 112 into the exchange cell 602 which may be desirable in some cases, for example where there is a desire to simplify operations and the requirements on second container-handling vehicle 504.

Turning to Fig. 9, a further alternative implementation is provided. In this example, the securing mechanism comprises four support plates 704 provided at each corner of the exchange cell 602. The exchange cell 602 in this example enables a container 112 to be inserted and removed from exchange cell 602 in four horizontal directions, both parallel and perpendicular with/to direction A-A.

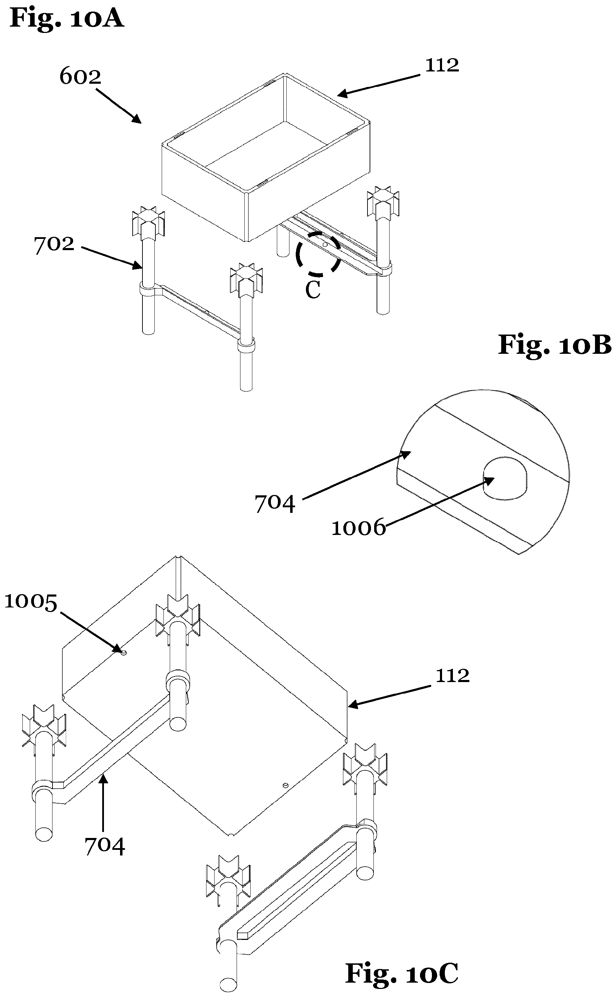

Turning to Figs. 10A-10C, a further alternative implementation is shown. In this example, the securing mechanism comprises two support plates 704 as in Fig. 7 and 8, but instead of a ridge in this example blocking member comprises a protrusion 1006. The protrusion can be seen more clearly in Fig. 10B which shows a close up detail view of the area shown within dashed circle C in Fig. 10A. In this example, and as is visible from the upward view of Figure 10C, container 112 comprises a corresponding recess 1005 configured to matingly receive protrusion 1006 when container 112 is placed in the exchange cell 602. This again serves to align container 112 at the desired location within exchange cell 602.

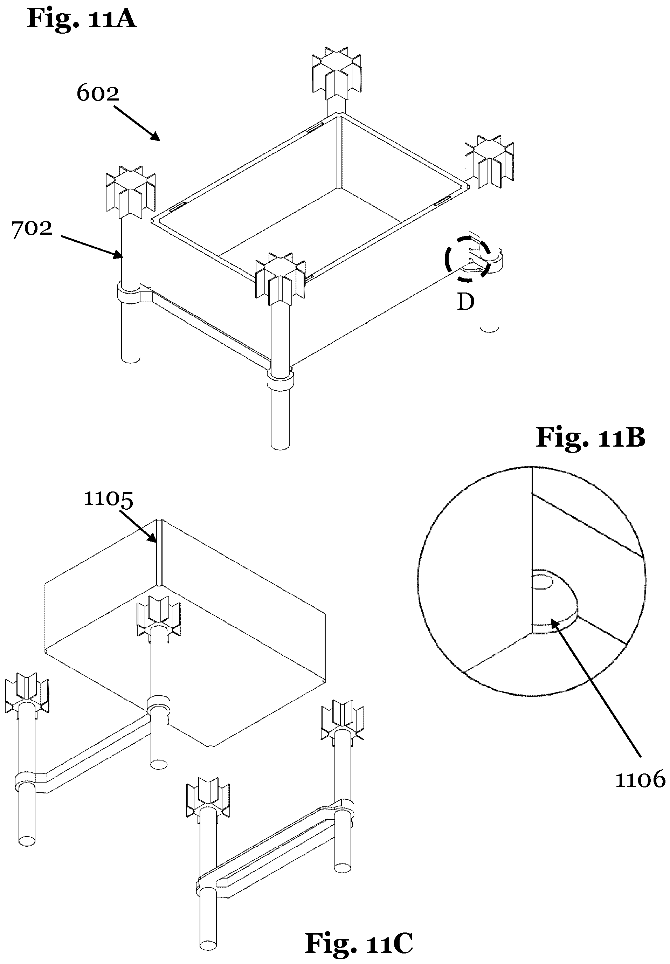

Turning to Figs. 11A-11C, a further alternative implementation is shown. This implementation is similar to that of Figs. 10A-10C except that in this example a protrusion 1106 is provided at each corner of the exchange cell frame 702 and the container 112 correspondingly has four recesses 1105, one at each corner. As before, Fig. 11B shows a close up detail view of the area shown within dashed circle D in Fig. 11A and Fig. 11C shows a upward view from which one of the recesses 1105 is more clearly visible.

It will be appreciated that any suitable number of one or more protrusions and corresponding recesses can be provided, and the quantities shown in Figs 10A-C and 11A-C are merely exemplary. The placement of the protrusions may also be reversed such that the container 112 comprises the protrusions and the recesses are provided in the securing mechanism of the exchange cell 602.

Whilst the example securing mechanisms of Figs. 7A-11C have been described as alternatives, it will be appreciated that any suitable combination of the mechanisms described can be provided. For example, a combination of one or more ridges 706 and protrusions 1006, 1106 can be provided. Support plates 704 can be provided at two, three or four sides or corners of exchange cell 602.

### Methods of using the disclosed systems

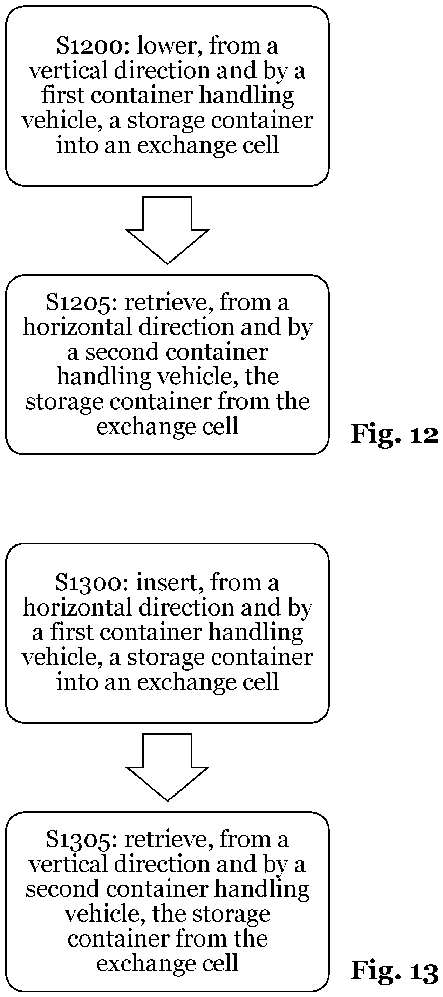

Turning now to Figs. 12 and 13, methods of utilising the disclosed exchange cell systems are described. In these methods, the exchange cell may take the form of any of the example exchange cells described herein.

Turning first to Fig. 12, the method comprises, at step 1200, lowering, from a vertical direction and by a first container handling vehicle, a storage container into an exchange cell. For example, a container 112 may be lowered by a container-handling vehicle 502 using a gripper 308, 322 as described above with respect to Figs. 3A-3D, 5 and 6.

At step 1205, the method comprises retrieving, from a horizontal direction and by a second container handling vehicle, the storage container from the exchange cell. For example, the container 112 may be retrieved by a container-handling vehicle 504 using an arm 604 as described above with respect to Figs. 5 and 6.

As can be seen, therefore, the disclosed exchange cell enables a container to be stored from a first (e.g. vertical) direction and then retrieved from a second (e.g. horizontal) direction. The disclosed securing mechanism ensures that the container is well aligned in both directions, ensuring that the method of Fig. 12 can be carried out reliably.

It will be apparent that the method of Fig. 12 can be reversed, as shown in Fig. 13.

The method of Fig. 13 comprises, at step 1300, inserting, from a horizontal direction and by a first container handling vehicle, a storage container into an exchange cell. For example, a container 112 may be inserted by a container-handling vehicle 504 using an arm 604 as described above with respect to Figs. 5 and 6.

At step 1305, the method comprises retrieving, from a vertical direction and by a second container handling vehicle, the storage container from the exchange cell. For example, the container 112 may be raised by a container-handling vehicle 502 using a gripper 308, 322 as described above with respect to Figs. 3A-3D, 5 and 6.

It will be appreciated by a skilled reader that the methods of Figs. 12 and 13 may further include steps or logic configured to prevent two container-handling vehicles from attempting to retrieve the same container at the same time. The details of how this is implemented in practice are beyond the scope of the present disclosure. Suffice to say that such anti-conflict logic can be implemented in any suitable manner as known in the art.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An exchange cell configured to enable a storage container of a storage and retrieval system to be accessed from at least two directions, the exchange cell comprising:
a frame configured to support a storage container,
wherein the frame enables the storage container to be accessed from a vertical direction by a first container-handling vehicle and from at least one horizontal direction by a second container-handling vehicle, and
wherein the frame comprises a securing mechanism configured to resist horizontal movement of the storage container in order to align the storage container at a desired position within the exchange cell.

2. The exchange cell of claim 1, wherein the securing mechanism is configured to resist horizontal movement of the storage container in any direction.

3. The exchange cell of claim 1 or 2, wherein the frame comprises a first opening configured to enable the storage container to be accessed from the vertical direction by the first container-handling vehicle, and wherein the securing mechanism is configured to align the storage container at a specific location relative to the first opening.

4. The exchange cell of any preceding claim, wherein the frame comprises a second opening configured to enable the storage container to be accessed from the horizontal direction by the second container-handling vehicle, and wherein the securing mechanism is configured to align the storage container at a specific location relative to the second opening.

5. The exchange cell of any preceding claim, wherein the securing mechanism comprises a blocking member which the storage container must be lifted over to enable the storage container to be removed from the exchange cell in the at least one horizontal direction.

6. The exchange cell of any preceding claim, wherein the securing mechanism comprises at least two support plates for supporting the storage container.

7. The exchange cell of claim 6, wherein a blocking member for resisting horizontal movement of the storage container is provided at an end of each support plate, optionally wherein a blocking member for resisting horizontal movement of the storage container is provided at both ends of each support plate.

8. The exchange cell of any preceding claim, wherein the frame comprises a first guide member configured to:
guide the storage container into position within the securing mechanism when it is placed into the exchange cell from the vertical direction; and/or
guide a gripper of the first container-handling vehicle as it lowers the storage container into the exchange cell or retrieves the storage container from the exchange cell in the vertical direction.

9. The exchange cell of any preceding claim, wherein the frame comprises a second guide member configured to:
guide the storage container into position within the securing mechanism when it is placed into the exchange cell from the horizontal direction; and/or
guide an extraction arm of the second container-handling vehicle as it moves the storage container into the exchange cell or retrieves the storage container from the exchange cell in the horizontal direction.

10. The exchange cell of any preceding claim, wherein the frame enables the/an extraction arm of the second container-handling vehicle to contact the bottom of the storage container to enable the second container-handling vehicle to retrieve the storage container from the exchange cell in the at least one horizontal direction.

11. The exchange cell of any preceding claim, wherein the frame enables the storage container to be accessed:
from two horizontal directions; or
from three horizontal directions; or
from four horizontal directions.

12. A container storage and retrieval system comprising:
an exchange cell grid, wherein each exchange cell in the exchange cell grid is arranged as defined in any of claims 1 to 11; and
tracks located above and/or adjacent to the exchange cell grid, configured to enable a first container-handling vehicle to travel along the tracks and interact with storage containers stored in the exchange cell grid from above in a vertical direction.

13. The container storage and retrieval system of claim 12, wherein the frame of each exchange cell in the exchange cell grid is configured to support a storage container in a plane that is parallel with the tracks located above and/or adjacent to the exchange cell grid.

14. The container storage and retrieval system of claim 12 or 13,
wherein the storage and retrieval system further comprises a storage grid adjacent to the exchange cell grid,
wherein tracks are located above the storage grid configured to enable a first container-handling vehicle to travel along the tracks and interact with storage containers stored in the storage grid from above in the vertical direction, and
wherein the tracks above the storage grid are continuous with the tracks above and/or adjacent to the exchange cell grid.

15. The container storage and retrieval system of any of claims claim 12 to 14, further comprising:
a first container-handling vehicle configured to travel along the tracks and interact with storage containers stored in the exchange cell grid from the vertical direction; and
a second container-handling vehicle configured to interact with storage containers stored in the exchange cell grid from a horizontal direction.

16. A method of storing and retrieving a storage container, the method comprising:
lowering, from a vertical direction and by a first container-handling vehicle, a storage container into an exchange cell; and
retrieving, from a horizontal direction and by a second container-handling vehicle, the storage container from the exchange cell,
wherein the exchange cell comprises a frame configured to support the storage container and a securing mechanism configured to resist horizontal movement of the storage container in order to align the storage container at a desired position within the exchange cell.

17. A method of storing and retrieving a storage container, the method comprising:
inserting, from a horizontal direction and by a first container-handling vehicle, a storage container into an exchange cell; and
retrieving, from a vertical direction and by a second container-handling vehicle, the storage container from the exchange cell,
wherein the exchange cell comprises a frame configured to support the storage container and a securing mechanism configured to resist horizontal movement of the storage container in order to align the storage container at a desired position within the exchange cell.

18. A computer apparatus configured to perform the method of claim 16 or 17; or a computer-readable medium comprising instructions which, when executed by a computer, cause the computer to carry out the method of claim 16 or 17; or a computer program comprising instructions which, when the program is executed by a computer, cause the computer to carry out the method of claim 16 or 17.
